# EUROPÄISCHE PATENTANMELDUNG

(11) **EP 0 974 257 A1**
(43) Veröffentlichungstag der Anmeldung: **26.01.2000**
(21) Anmeldenummer: 99250232.8
(22) Anmeldetag: 14.07.1999
(51) Int. Cl.: A01D 46/24

(54) **Tragbarer, motorisierter Schüttelstab als Ernte-maschine für reife Strauch- und Baumfrüchte**

(30) Priorität: 20.07.1998 DE 19833790
(71) Anmelder: ELEXSO SORTIERTECHNIK GmbH, D-21035 Hamburg (DE)
(72) Erfinder: Mallant, Jos Peter, 21035 Hamburg (DE); Brümmer, Bernd, 22117 Hamburg (DE); Justus, Harald C., 21465 Reinbek (DE)
(74) Vertreter: UEXKÜLL & STOLBERG

(57) **Zusammenfassung**

Die Erfindung betrifft einen tragbaren, motorisierten Schüttelstab als Erntemaschine für reife Strauch- und Baumfrüchte, mit einem besenstielartigen Stab (1), an dessen einem Ende eine Schüttelvorrichtung (2) mit bewegbaren Fingern (4) angeordnet ist, die eine Rüttelbewegung durchführen können. Der Antrieb der Finger (4) erfolgt über einen Motor (3).

## Beschreibung

Die Erfindung betrifft einen tragbaren, motorisierten Schüttelstab als Erntemaschine für reife Strauch- und Baumfrüchte, mit einem besenstielartigen Stab, an dessen einem Ende ein erster Handgriff und an dessen anderem Ende eine Schüttelvorrichtung angeordnet ist, wobei der Stab eine Welle aufnimmt, die in der Nähe des ersten Handgriffs von einer Antriebseinrichtung angetrieben wird und die mit ihrem anderen Ende die mit bewegbaren Fingern versehene Schüttelvorrichtung antreibt.

Aus der brasilianischen Patentanmeldung PI 9601916-6 A ist eine derartige Erntemaschine bekannt. Bei dieser sind die Finger an Gelenken angeordnet und werden durch Kolben radial oder voneinander weg seitlich nach außen gedrückt, wenn ein von der Welle gedrehtes Nockenpaar die Kolben berührt, während Zugfedern die Finger wieder gegeneinander nach innen ziehen, wenn die Nocken gegenüber der erwähnten ersten Stellung um 90° verdreht sind und damit die Kolben nicht berühren.

Ein Nachteil dieser bekannten Erntemaschine besteht darin, daß die Führung der Finger äußerst aufwendig ist und damit einem beträchtlichen Verschleiß unterliegt. Außerdem ist es kaum möglich, den Hub auf einfache Weise den unterschiedlichen Erfordernissen der Ernte anzupassen.

**Aufgabe** der Erfindung ist es, die Erntemaschine der eingangs genannten Art dahingehend zu verbessern, daß der Hub der Finger auf schnelle und einfache Weise zu verändern ist und eine pendelnde Bewegung der Finger erreicht wird, die einen möglichst geringen Verschleiß und eine effektivere Ernte ermöglicht.

Diese Aufgabe wird dadurch gelöst, daß die Welle in der Nähe der Finger ein Ritzel trägt, das mit zwei verzahnten Kurbeln kämmt, die in der Nähe ihres Umfangs sich axial von den Kurbeln weg erstreckende Exzenterzapfen aufweisen; daß das Ritzel und die Kurbeln in einem Kurbelgehäuse montiert sind, das den Zugriff zu den Exzenterzapfen gestattet; daß das Kurbelgehäuse im größeren Abstand zur Welle als die Außendurchmesser der Kurbeln je einen jeder Kurbel zugeordneten Zapfen aufweist, die sich parallel zu den Exzenterzapfen erstrecken; daß je Kurbel eine Fingerplatte mit einen Langloch und einem Lager vorgesehen ist, die an der einen Seite einen oder mehrere Finger trägt; und daß jede Fingerplatte mit ihrem Langloch den zugehörigen Zapfen lösbar aufnimmt, während der zugehörige Exzenterzapfen in dem in der Fingerplatte angeordneten Lager lösbar steckt.

Das Kurbelgehäuse ist mit dem Stab entweder geradlinig oder abwinkelbar verbunden. Im letzteren Fall erfolgt die Verbindung von Kurbelgehäuse und Stab über ein dem Fachmann bekanntes Gelenk mit ebenfalls bekannter Kraftübertragung, so daß das Kurbelgehäuse und damit die Finger gegenüber dem Stab angewinkelt werden können.

Ein Ausführungsbeispiel der Erfindung wird nachfolgend an Hand von Figuren näher erläutert; es zeigen:
- **Figur 1**: eine perspektivische Darstellung des Schüttelstabs;
- **Figur 2**: eine perspektivische Darstellung der Schüttelvorrichtung von Figur 1;
- **Figur 3**: eine Draufsicht auf die Schüttelvorrichtung von Figur 2 in perspektivischer Darstellung; und
- **Figur 4**: eine Darstellung ähnlich wie Figur 3, jedoch in orthogonaler Darstellung.

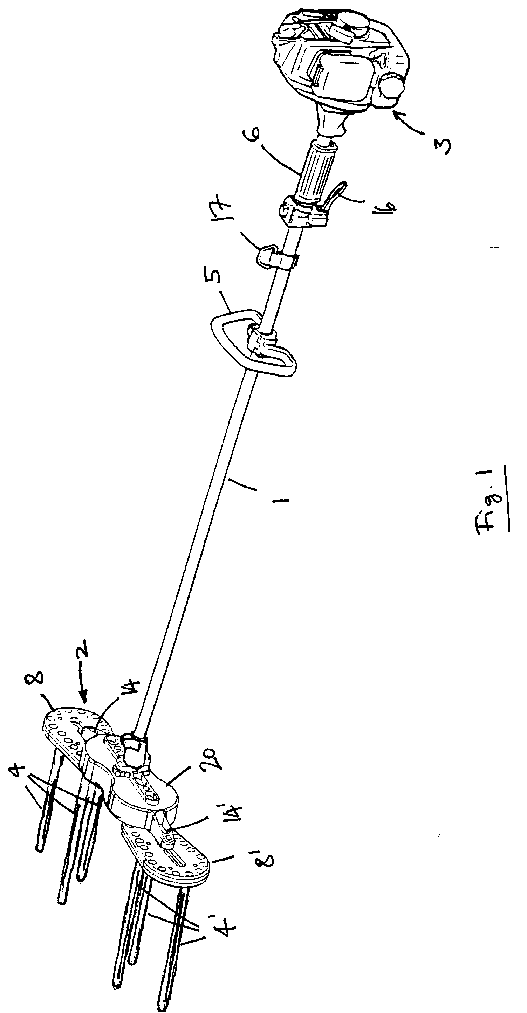

**Figur 1** zeigt einen tragbaren, motorisierten Schüttelstab mit einem Stab 1, in dem eine nicht erkennbare Welle geführt ist. Das in dieser Darstellung rechte Ende des Stabes 1 ist mit einem Motor 3 gekoppelt, der die Welle antreibt. Der Motor 3 ist in der dargestellten Ausführungsform ein Benzinmotor mit integriertem Tank. Ein Hebel 16 dient zur Regelung der Drehzahl des Motors, der über eine Fliehkraftkupplung mit der nicht dargestellten Welle gekoppelt ist. Damit kann das Antriebsdrehmoment vom Motor 3 zur Welle und damit zu einer am anderen Ende des Stabes 1 angeordneten Schüttelvorrichtung 2 übertragen werden.

In der Nähe des ersten Handgriffs 6 ist eine Manschette mit einem Auge 17 angebracht, daß zum Einhängen eines Tragegurtes dient. Zweckmäßigerweise ist das Auge 17 etwa im Schwerpunkt des Schüttelstabs angeordnet, also zu dem ersten Ende des Stabes 1 hin, an dem der Motor 3 sitzt, da dieser ein größeres Gewicht als der übrige Teil der Vorrichtung hat.

Auf dem Stab 1 ist ferner ein Handgriff 5 angeordnet, der von einer Bedienungsperson erfaßt wird, und zwar bei einem Rechtshänder in der Regel mit der linken Hand, während die rechte Hand den ersten Handgriff 6 umfaßt. Auf diese Weise wird der Schüttelstab im Gebrauch ähnlich wie eine Sense gehalten.

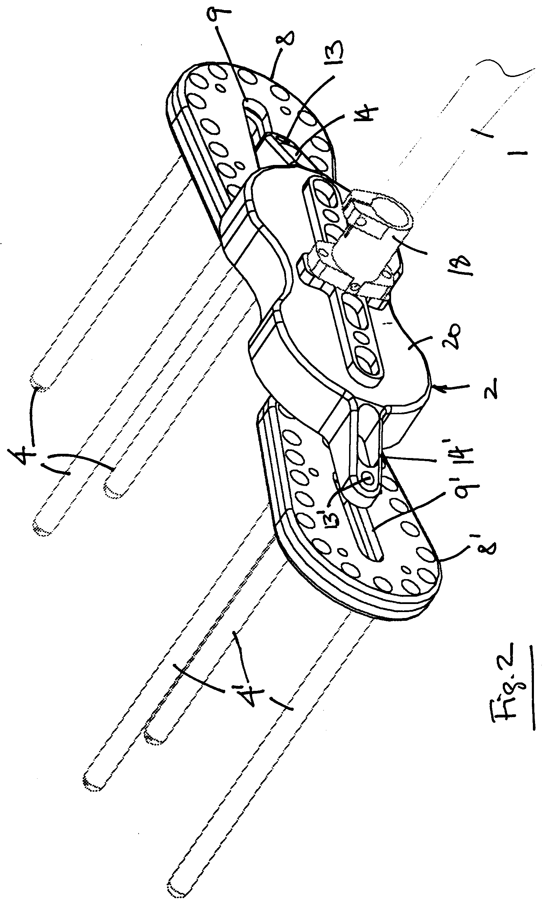

Am anderen Ende des Stabes 1, das dem Motor 3 gegenüberliegt, ist eine Schüttelvorrichtung 2 angebracht, die ein Kurbelgehäuse 20 umfaßt, dessen Unterseite dem Motor 3 zugewandt ist und an dessen Oberseite zwei Fingerplatten 8, 8' mit Fingern 4, 4' angeordnet sind. Die Fingerplatten 8, 8' haben identischen Aufbau und tragen je drei Finger 4, 4', die sich parallel zum Stab 1 erstrecken und von den Fingerplatten 8, 8' etwa 10 - 40 cm vorstehen. Die Fingerplatten 8, 8' und die Finger 4, 4' sind zweckmäßigerweise aus einem verschleißarmen Material wie Polyethylen (PE) hergestellt. Einzelheiten der Schüttelvorrichtung 2 werden nun an Hand der Figuren 2 bis 4 näher erläutert. Es wird darauf hingewiesen, daß nachfolgend nur eine Seite der Schüttelvorrichtung 2 beschrieben wird, da diese symmetrisch aufgebaut ist. Gleiche Teile sind in den Figuren also mit gleichen Bezugszeichen versehen, wobei die jeweils identischen oder spiegelbildlichen Teile mit einem Apostroph bezeichnet sind.

Zunächst zeigt **Figur 2** die Schüttelvorrichtung 2 in vergrößerter Darstellung, wobei man erkennt, daß auf dem unten geschlossenen Kurbelgehäuse 20 ein geschlitzter Klemmstutzen 18 befestigt ist, der durch eine Klemmverbindung mit dem Stab 1 in festen Eingriff gebracht werden kann. Das Kurbelgehäuse 20 hat etwa die Form eines Geigenkastens mit zwei geleichmäßigen Ausbuchtungen, an denen diametral gegenüber je einen Fortsatz 14, 14' ansetzt, der an seinem Ende je einen Zapfen 13, 13' trägt. Jeder Zapfen 13 greift in ein Langloch 9 der Fingerplatte 8, und zwar von der Seite, die den Fingern 4 abgewandt ist.

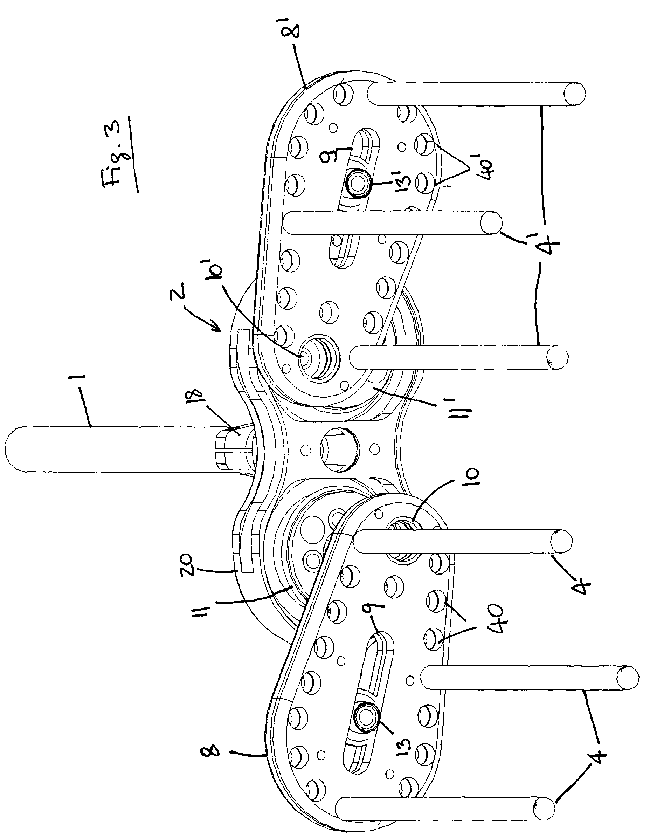

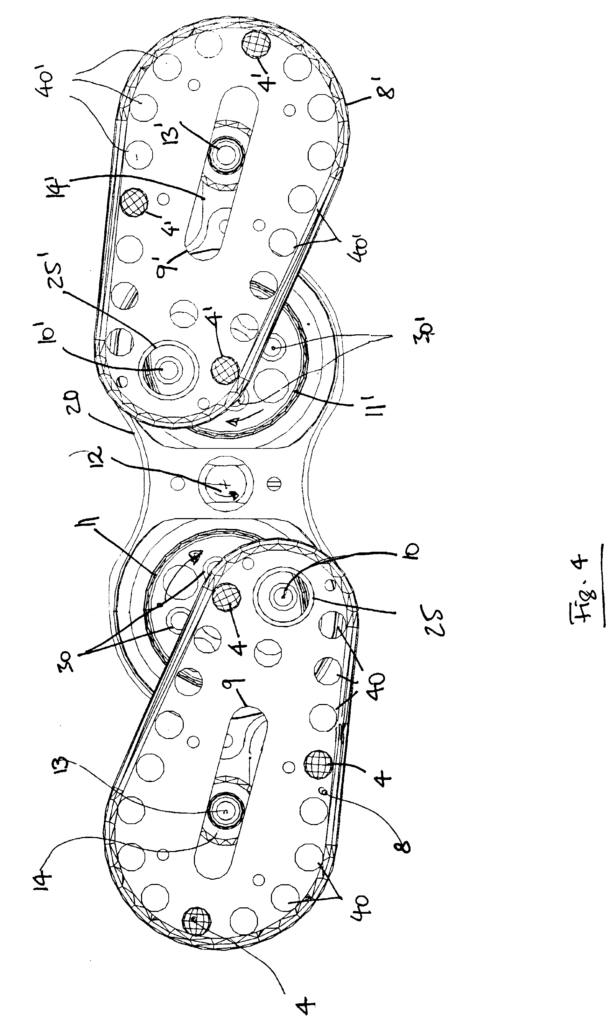

Die **Figuren 3** und **4** verdeutlichen dies besser, so daß nachfolgend auf diese beiden Figuren bezug genommen wird.

Die Figuren 3 und 4 zeigen das Kurbelgehäuse 2 von oben ohne Abdeckung, das in der Mitte ein Ritzel 12 trägt, das von der im Stab 1 geführten Welle angetrieben wird. Das Ritzel 12 kämmt mit zwei außenverzahnten Kurbeln 11, 11', die in dem Kurbelgehäuse 20 drehbar gelagert sind. Die verzahnten Kurbeln 11 sind im Prinzip zwei Zahnräder, deren Drehachsen auf einer Geraden mit der Achse des Ritzels 12 liegen. In einer Ausführungsform bilden die Kurbeln 11 mit dem Ritzel 12 eine Untersetzung von 5,6:1. Es sind aber auch andere Untersetzungsverhältnisse möglich. Auf diese Weise stehen bei dieser Ausführungsform das Ritzel 12 und die Kurbeln 11, 11' in unmittelbarem Eingriff miteinander. In einer anderen, nicht dargestellten Ausführungsform werden die Kurbeln 11, 11' von der Welle mittelbar über einen Zahnriemen oder eine Kette angetrieben.

Um den Mittelpunkt jeder verzahnten Kurbel 11 sind mehrere Gewindebohrungen 30 angeordnet, in die ein Exzenterzapfen 10 einsetzbar ist, und zwar zweckmäßigerweise durch eine Schraubverbindung. Je nach Wahl der entsprechenden Gewindebohrung 30 kann die Exzentrizität des Exzenterzapfens 10 verändert werden, was den Oszillationshub der Finger 4 beeinflußt.

Die Exzenterzapfen 10 erstrecken sich in Richtung der Finger 4 und damit parallel zum Stab 1. Im Betrieb der Erntemaschine greifen sie in den ein Lager 25, das in einer Bohrung der Fingerplatte 8 sitzt und die Drehung des Exzenterzapfens 10 gegenüber der Fingerplatte 8 zuläßt. Anstelle eines Lagers kann gegebenenfalls auch eine drehbare Buchse vorgesehen sein. Es muß lediglich sichergestellt werden, daß sich der Exzenterzapfen 10 beim Drehen der verzahnten Kurbel 11 in der Fingerplatte 8 drehen kann.

Zur Befestigung der Fingerplatte 8 an dem Exzenterzapfen 10 dient eine Kopfschraube.

Zur weiteren Stabilisierung und Führung der Fingerplatte 8 ist ein Langloch 9 vorgesehen, in das ein am Kurbelgehäuse 20 befestigter Zapfen 13 eingreift. Auch an dieser Stelle ist die Fingerplatte 8 zweckmäßigerweise über eine in den Zapfen 13 eingeschraubte Kopfschraube mit Unterlegscheibe gesichert, und zwar mit einem derartigen Spiel, daß die Fingerplatte 8 auf dem Zapfen 13 in Richtung des Langloches 9 verschoben werden kann. Der Zapfen 13 sitzt in einer drehbaren Buchse, so daß wenig Reibung zwischen Buchse und Fingerplatte 8 erfolgt und damit der Verschleiß minimiert ist.

Treibt nun im Betrieb die durch den Stab 1 geführte Welle das Ritzel 12 an, so dreht es beide Kurbeln 11, 11' mit, die über ihre Exzenterzapfen 10, 10' die einen Enden der Fingerplatten 8, 8' auf einer Kreisbahn bewegen, während die gegenüberliegenden anderen Enden der Fingerplatten 8, 8' eine Pendelbewegung ausführen, da die in die Langlöcher 9, 9' über drehbare Buchsen eingreifenden Zapfen 13, 13' eine Drehbewegung der Fingerplatten 8, 8' um den Mittelpunkt jeder Kurbel 11, 11' verhindern und statt dessen eine Pendelbewegung hervorrufen. Dies führt zu einer Rüttelbewegung der Finger 4, 4', die sehr gut geeignet ist, Früchte von den Zweigen an Büschen oder Bäumen abzuschütteln oder abzustreifen.

Man erkennt in den Figuren 3 und 4 außerdem, daß am Rand der Fingerplatten 8 eine Anzahl von Bohrungen angebracht ist, die zur Aufnahme der Finger 4 dienen und die es damit ermöglichen, die Anordnung der Finger 4 auf jede gewünschte Weise zu verändern und den jeweiligen Arbeitsbedingungen anzupassen. Zu diesem Zweck werden die Finger 4 mit ihren Enden entweder in die Bohrungen 40 hineingepreßt, in diese eingeschraubt oder eingesteckt und durch einen Sicherungsring gehalten.

Es ist auch klar, daß die Finger 4 leicht ausgetauscht werden können, beispielsweise beim Bruch oder wenn für den Betrieb längere oder kürzere Finger 4 gewünscht werden.

## Patentansprüche

1. Tragbarer, motorisierter Schüttelstab als Erntemaschine für reife Strauch- und Baumfrüchte, mit einem besenstielartigen Stab (1), an dessen einem Ende ein erster Handgriff (6) und an dessen anderem Ende eine Schüttelvorrichtung (2) angeordnet ist, wobei der Stab (1) eine Welle aufnimmt, die in der Nähe des ersten Handgriffs (6) von einer Antriebseinrichtung (3) angetrieben wird und die mit ihrem anderen Ende die mit bewegbaren Fingern (4) versehene Schüttelvorrichtung (2) antreibt, **dadurch gekennzeichnet,**
- daß die Welle in der Nähe der Finger (4) ein Ritzel (12) trägt, das mit zwei verzahnten Kurbeln (11, 11') kämmt, die in der Nähe ihres Umfangs sich axial von den Kurbeln weg erstreckende Exzenterzapfen (10, 10') aufweisen;
- daß das Ritzel (12) und die Kurbeln (11, 11') in einem Kurbelgehäuse (20) montiert sind, das den Zugriff zu den Exzenterzapfen (10, 10') gestattet;
- daß das Kurbelgehäuse (20) im größeren Abstand zur Welle als die Außendurchmesser der Kurbeln (11, 11') je einen jeder Kurbel zugeordneten Zapfen (13, 13') aufweist, die sich beide parallel zu den Exzenterzapfen (10, 10') erstrecken;
- daß je Kurbel (11, 11') eine Fingerplatte (8, 8') mit einem Langloch (9, 9') und einem Lager (25, 25') vorgesehen ist, die an der einen Seite einen oder mehrere Finger (4, 4') trägt; und
- daß jede Fingerplatte (8, 8') mit ihrem Langloch (9, 9') den zugehörigen Zapfen (13, 13') lösbar aufnimmt, während der zugehörige Exzenterzapfen (10, 10') in dem in der Fingerplatte (8, 8') sitzenden Lager (25, 25') lösbar steckt.

2. Schüttelstab nach Anspruch 1, **dadurch gekennzeichnet,** daß am Rand jeder Fingerplatte (8, 8') eine Anzahl von Bohrungen (40, 40') zum Einsetzen verschiedener Finger (4, 4') und Fingerpositionen vorgesehen ist.

3. Schüttelstab nach Anspruch 1 oder 2, **dadurch gekennzeichnet,** daß jede Kurbel (11, 11') eine Anzahl von Gewindebohrungen (30, 30') für das Versetzen des Exzenterzapfens (10, 10') aufweist.

4. Schüttelstab nach einem der Ansprüche 1 bis 3, **dadurch gekennzeichnet,** daß die Kurbeln (11, 11') und die Zapfen (13, 13') auf einer durch die Ritzelachse verlaufenden Geraden liegen.

5. Schüttelstab nach einem der Ansprüche 1 bis 4, **dadurch gekennzeichnet,** daß die Fingerplatten (8, 8') und die Finger (4, 4') aus thermoplastischem Kunststoff hergestellt sind.

6. Schüttelstab nach einem der Ansprüche 1 bis 5, **dadurch gekennzeichnet,** daß die Exzenterzapfen (10, 10') in Lagern (25, 25') stecken, die in den Fingerplatten (8, 8') sitzen.

7. Schüttelstab nach einem der Ansprüche 1 bis 5, **dadurch gekennzeichnet,** daß die Zapfen (13, 13') in drehbaren Buchse stecken, die in die Langlöcher (9, 9') der Fingerplatten (8, 8') eingreifen.

8. Schüttelstab nach einem der Ansprüche 1 bis 7, **dadurch gekennzeichnet,** daß die Schüttelvorrichtung (2) mit einer Gelenkhalterung versehen ist.
